# EUROPEAN PATENT APPLICATION

(11) **EP 4 432 111 A1**
(43) Date of publication of application: **18.09.2024**
(21) Application number: 21964095.0
(22) Date of filing: 12.11.2021
(51) Int. Cl.: G06F 15/82

(54) **DATA GENERATION DEVICE AND PROGRAM**

(71) Applicant: Nippon Telegraph And Telephone Corporation, Chiyoda-ku Tokyo 100-8116 (JP)
(72) Inventor: PRIYANKARA, Sampath, Musashino-shi, Tokyo 180-8585 (JP); ISHIZAKI, Teruaki, Musashino-shi, Tokyo 180-8585 (JP); SAKAMOTO, Takeshi, Musashino-shi, Tokyo 180-8585 (JP); ARIKAWA, Yuki, Musashino-shi, Tokyo 180-8585 (JP); MIURA, Naoki, Musashino-shi, Tokyo 180-8585 (JP); ITO, Tsuyoshi, Musashino-shi, Tokyo 180-8585 (JP); TANAKA, Kenji, Musashino-shi, Tokyo 180-8585 (JP)
(74) Representative: Samson & Partner Patentanwälte mbB
(86) International application number: PCT/JP2021/041752
(87) International publication number: WO 2023/084740

(57) **Abstract**

A data generating device (1) is a data generating device configured to generate table data for determining destinations for data transferred between a plurality of computation circuits (41) that sequentially execute a plurality of processes on processing data. The data generating device includes a first acquisition unit (1F) configured to acquire a first correspondence table between a data ID for identifying the processing data and a flow ID for identifying a flow that specifies which computation circuit processes the processing data in what order, a second acquisition unit (1G) configured to acquire a second correspondence table between the flow ID and flow information for specifying content of a flow identified by the flow ID according to the order of the destinations, and a generation unit (1H) configured to associate the data ID of the acquired first correspondence table with the flow information of the acquired second correspondence table through the flow ID, and generate the table data in which the data ID and the flow information are associated with each other.

## Description

### [Technical Field]

The present invention relates to a data generating device and a program.

### [Background Art]

Devices such as smartphones, personal computers, and servers are composed of computers. For example, such a computer is configured to include a general-purpose processor that reads programs to execute calculations, and a communication line such as a bus that connects a storage device and the general-purpose processor. Such computers continue to require various performance improvements such as higher speed, higher throughput, smaller size, lower power efficiency, improved processing flexibility, and improved user convenience. In order to meet these demands, calculators having various features have appeared. For example, there are GPUs for high-speed video and AI processing, ASICs that can process only specific functions at ultra-high speeds but cannot change the processing content, FPGAs that are high-speed but can change the processing content after manufacturing, and the like.

In recent years, a configuration that aims to improve the performance of a computer as a whole by using calculators having various characteristics as accelerators has appeared (NPL 1). Such a configuration is composed of a control unit such as a general-purpose processor, a storage unit, a plurality of computation units such as FPGAs, and a communication line such as a bus for connecting these components. In such a configuration, for a specific process, a computation unit that is good at the process may be in charge of executing the process. In this way, the overall performance of the computer is improved by allocating a specific process to a computation unit which is good at the process.

### [Citation List]

### [Non Patent Literature]

[NPL 1] R. Takano and T. Kudoh, "Flow-centric computing leveraged by photonic circuit switching for the post-moore era," 2016 Tenth IEEE/ACM International Symposium on Networks-on-Chip (NOCS), 2016, pp. 1-3, doi: 10.1109/NOCS.2016.7579339.

### [Summary of Invention]

### [Technical Problem]

In the configuration described above, it is necessary to prepare table data for determining destinations for data transferred between a plurality of computation circuits, but NPL 1 does not disclose this point.

An object of the present invention is to suitably generate table data for determining destinations for data transferred between a plurality of computation circuits.

### [Solution to Problem]

In order to solve the above problem, according to the present invention, there is provided a data generating device configured to generate table data for determining destinations for data transferred between a plurality of computation circuits that sequentially execute a plurality of processes on processing data, the device including: a first acquisition unit configured to acquire a first correspondence table between a data ID for identifying the processing data and a flow ID for identifying a flow that specifies which computation circuit processes the processing data in what order; a second acquisition unit configured to acquire a second correspondence table between the flow ID and flow information for specifying content of a flow identified by the flow ID according to the order of the destinations; and a generation unit configured to associate the data ID of the acquired first correspondence table with the flow information of the acquired second correspondence table through the flow ID, and generate the table data in which the data ID and the flow information are associated with each other. In addition, a program according to the present invention causes a computer to function as each of the units. The program may be stored in a non-transitory computer-readable storage medium.

### [Advantageous Effects of Invention]

According to the present invention, it is possible to suitably generate table data for determining destinations for data transferred between a plurality of computation circuits.

### [Brief Description of Drawings]

[Fig. 1] Fig. 1 is a block diagram illustrating a configuration of a computer of according to a first embodiment of the present invention.
[Fig. 2] Fig. 2 is a flowchart of the operation of the computer shown in Fig. 1.
[Fig. 3] Fig. 3 is a diagram illustrating a configuration example of a transmission circuit.
[Fig. 4] Fig. 4 is a block diagram illustrating a configuration of the computer according to a modification example of the first embodiment.
[Fig. 5] Fig. 5 is a flowchart of the operation of a computer according to a second embodiment.
[Fig. 6] Fig. 6 is a diagram illustrating a configuration example of a computation circuit according to the second embodiment.
[Fig. 7] Fig. 7 is a diagram illustrating a configuration example of another computation circuit according to the second embodiment.
[Fig. 8] Fig. 8 is a flowchart of the operation of a computer according to a third embodiment.
[Fig. 9] Fig. 9 is a diagram illustrating a configuration example of a computation circuit according to the third embodiment.
[Fig. 10] Fig. 10 is a diagram illustrating a data structure of ID-tagged data according to a fourth embodiment.
[Fig. 11] Fig. 11 is a diagram illustrating a configuration example of an ID conversion table according to a fifth embodiment.
[Fig. 12] Fig. 12 is a diagram illustrating a configuration example of an ID conversion table according to the fifth embodiment.
[Fig. 13] Fig. 13 is a flowchart of the operation of a computer according to the fifth embodiment.
[Fig. 14] Fig. 14 is a diagram illustrating a configuration example of a computation circuit according to the fifth embodiment.
[Fig. 15] Fig. 15 is a diagram illustrating a configuration example of a computation circuit according to a sixth embodiment.
[Fig. 16] Fig. 16 is a block diagram illustrating a configuration of a computer according to a seventh embodiment.
[Fig. 17] Fig. 17 is a block diagram illustrating a configuration of a computer according to an eighth embodiment.
[Fig. 18] Fig. 18 is a diagram illustrating a data structure of ID-tagged data according to the eighth embodiment.
[Fig. 19] Fig. 19 is a diagram illustrating a configuration example of a process settings table according to the eighth embodiment.
[Fig. 20] Fig. 20 is a flowchart of processing which is performed by a computation circuit according to the eighth embodiment.
[Fig. 21] Fig. 21 is a configuration diagram of a data generating device according to the eighth embodiment.
[Fig. 22] Fig. 22 is a configuration diagram of the data generating device according to the eighth embodiment.
[Fig. 23] Fig. 23 is a diagram illustrating a state of generation of the process settings table according to the eighth embodiment.

### [Description of Embodiments]

Hereinafter, embodiments of the present invention will be described in detail with reference to the accompanying drawings, but the present invention is not limited to the following embodiments.

### [First embodiment]

A first embodiment of the present invention makes it possible to transmit and receive data directly between a plurality of computation units, thereby reducing the number of times a control unit transfers data and improving the throughput of the entire computer.

### (Configuration of computer 10)

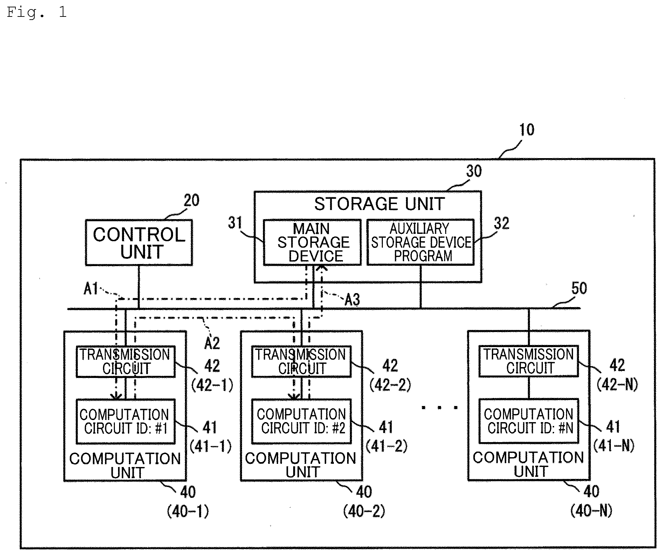

As shown in Fig. 1, a computer 10 according to the first embodiment includes a control unit 20, a storage unit 30 including a main storage device 31 (main memory) and an auxiliary storage device 32 of the control unit 20, a plurality of computation units 40, and a communication line 50 such as a bus to which these components are connected.

The control unit 20 reads out and executes a program stored in the auxiliary storage device 32 such as a hard disk or a solid state drive (SSD) into the main storage device 31 such as a random access memory (RAM). The control unit 20 is composed of, for example, a processor that performs predetermined processing by executing a program, for example, a general-purpose processor such as a central processing unit (CPU). As will be described later, the control unit 20 executes a program that causes at least some of the plurality of computation units 40 to perform processing.

Each of the computation units 40 is composed of a one-chip integrated circuit such as a field-programmable gate array (FPGA) or an application specific integrated circuit (ASIC). Each of the computation units 40 is composed of a computation circuit 41 and a transmission circuit 42.

The computation circuit 41 is configured to execute processing determined in advance. The types of processing executed by each computation circuit 41 differ. In the computation circuit 41, "#1" to "#N" are set as computation circuit IDs that can uniquely identify each computation circuit 41. Hereinafter, when the computation circuits 41 are distinguished with each computation circuit ID, the computation circuit 41 may be referred to as computation circuits 41-1 to 41-N, respectively. For example, the computation circuit 41 to which "#1" is imparted is also referred to as the computation circuit 41-1. The computation circuit 41 to which "#2" is imparted is also referred to as the computation circuit 41-2. The computation circuit 41 to which "#N" is imparted is also referred to as the computation circuit 41-N. The computation unit 40 having each of the computation circuits 41-1 to 41-N may also be referred to as the computation units 40-1 to 40-N.

The transmission circuit 42 transfers data transmitted from the control unit 20, the main storage device 31, or another computation unit 40 through the communication line 50 to the computation circuit 41. In addition, the transmission circuit 42 transfers data output by the computation circuit 41 of the same computation unit 40 to the control unit 20, the main storage device 31, or another computation unit 40 through the communication line 50. The transmission circuit 42 of each of the computation units 40-1 to 40-N is also referred to as the transmission circuits 42-1 to 42-N.

### (Operation example of computer 10)

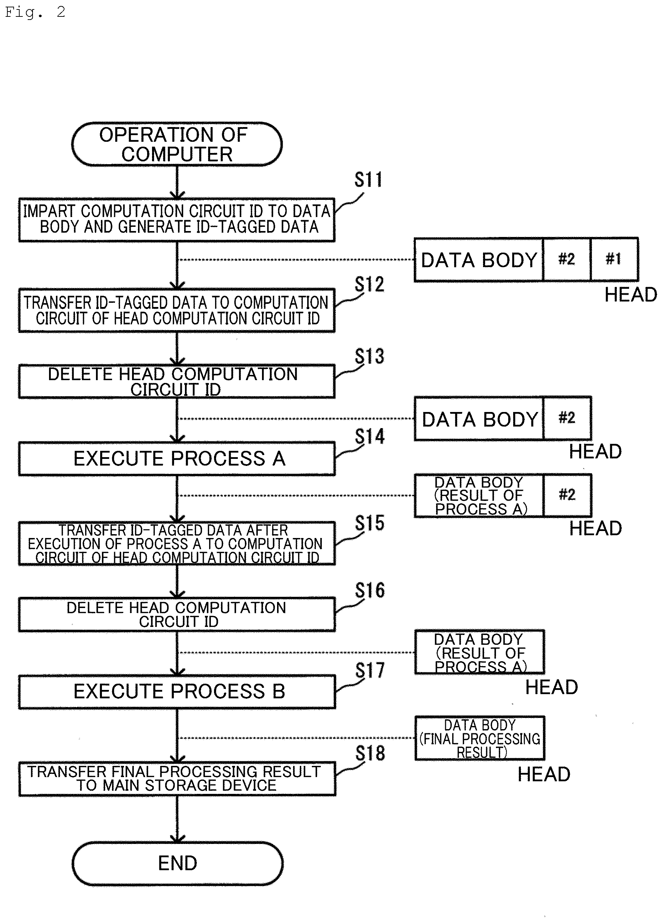

An example of the operation of the computer 10 will be described with reference to Figs. 1 and 2. Here, as an example, it is assumed that the computer 10 executes a process A and a process B using the computation result of the process A. The process A is assumed to be executed by the computation circuit 41-1. The process B is assumed to be executed by the computation circuit 41-2. Examples of the process A and the process B include image processing. An example of the process A is an image binarization process, and an example of the process B is an edge detection process for a binarized image. In addition, it is assumed that the main storage device 31 of the storage unit 30 stores, for example, processing data to be processed by the process A and the process B supplied from the outside through a network or the like.

The operation of Fig. 2 is started when the control unit 20 reads out programs stored in the auxiliary storage device 32 to designate the execution of the process A and the process B into the main storage device 31 and starts executing the programs. Hereinafter, the control unit 20 performs the following operations by executing the above program.

In the operation of Fig. 2, first, the control unit 20 uses the processing data stored in the storage unit 30 as a data body, and imparts this data body the computation circuit ID of each computation circuit 41 that executes the process A and the process B (step S11 in Figs. 1 and 2).

The computation circuit ID may be described in the above program, or may be stored in the auxiliary storage device 32 corresponding to the above program. The control unit 20 imparts "#1" and "#2" which are computation circuit IDs of the computation unit 40-1 that executes the processes A and B to the processing data serving as a data body from the head in the order of processing. Hereinafter, all the data consisting of the data body and the computation circuit ID imparted to the data body is also referred to as ID-tagged data. The computation circuit ID functions as the destination, that is, address, of the data body. Meanwhile, the computation circuit ID also identifies the computation unit 40 including the computation circuit 41 and the transmission circuit 42 connected to the computation circuit 41.

The control unit 20 transfers the ID-tagged data to the computation circuit 41-1 with the head "#1" as a computation circuit ID (step S12). The ID-tagged data is transferred through the communication line 50 and the transmission circuit 42-1 (see also the dashed-dotted line arrow A1 in Fig. 1). As will be described below, here, the process A performed by the computation circuit 41-1 and the process B performed by the computation circuit 41-2 are executed with the transfer of ID-tagged data as a trigger. In this way, the control unit 20 that operates by executing a program performs control for causing the computation circuits 41-1 and 41-2 to sequentially execute the process A and the process B.

The transmission circuit 42-1 that transfers the ID-tagged data deletes"#1" which is the head computation circuit ID from the ID-tagged data (step S13). The computation circuit 41-1 executes the process A on the data body of the ID-tagged data from which "#1" has been deleted (step S14). Meanwhile, the format of the computation circuit ID and the like are determined in advance, and each computation circuit 41 including the computation circuit 41-1 is configured to be able to recognize the presence or absence of the computation circuit ID and the head and tail of the data body. The computation circuit 41-1 generates new ID-tagged data using a computation result obtained in the process A (also referred to as processing data after the process A, a processing result of the process A, or the like) as a new data body. This ID-tagged data is data with "#2" imparted to the data body.

The computation circuit 41-1 transfers the generated ID-tagged data to the computation circuit 41-2 with the head "#2" as a destination and the "#2" as a computation circuit ID (step S15). The ID-tagged data is transferred through the transmission circuit 42-1, the communication line 50, and the transmission circuit 42-2 (see also the dashed-dotted line arrow A2 in Fig. 1). In this transfer process, the transmission circuit 42-1 that has received the ID-tagged data from the computation circuit 41-1 may notify the control unit 20 of the reception. In this case, the timing of transfer of the ID-tagged data may be controlled by the control unit 20 that has received the notification. For example, the control unit 20 instructs the transmission circuit 42-1 to transfer the ID-tagged data at a predetermined timing.

The transmission circuit 42-2 that transfers the ID-tagged data deletes "#2" which is the head computation circuit ID from the ID-tagged data (step S16). Thereby, the computation circuit ID is not imparted to the data body. The computation circuit 41-2 executes the process B on the data body (step S17). The computation result of this process B is the processing data after a current series of processes, that is, a final processing result, and is transmitted from the computation circuit 41-2 to the transmission circuit 42-2 as a new data body. Here, the transmission circuit 42 of each computation unit 40 is configured to transmit the data body as a final processing result to the main storage device 31 of the storage unit 30 when the computation circuit ID is not imparted to the data body from the computation circuit 41. Therefore, the transmission circuit 42-2 transmits the data body (that is, the final processing result) from the computation circuit 41-2 to which the computation circuit ID is not attached to the main storage device 31 through the communication line 50 (step S18, see also the dashed-dotted line arrow A3 in Fig. 1). Meanwhile, the transmission circuit 42-2 may notify the control unit 20 to that effect when the data body is received. In terms of a program, the control unit 20 can recognize that the process B has ended when the notification from the transmission circuit 42-2 is received, in other words, a series of processes to be executed by the computation circuit 41 designated by the program has ended. The control unit 20 may perform control for transferring the data of the processing result received by the transmission circuit 42-2 to the main storage device 31 by executing an interrupt process when the notification is received.

### (Detailed configuration and operation of transmission circuit 42)

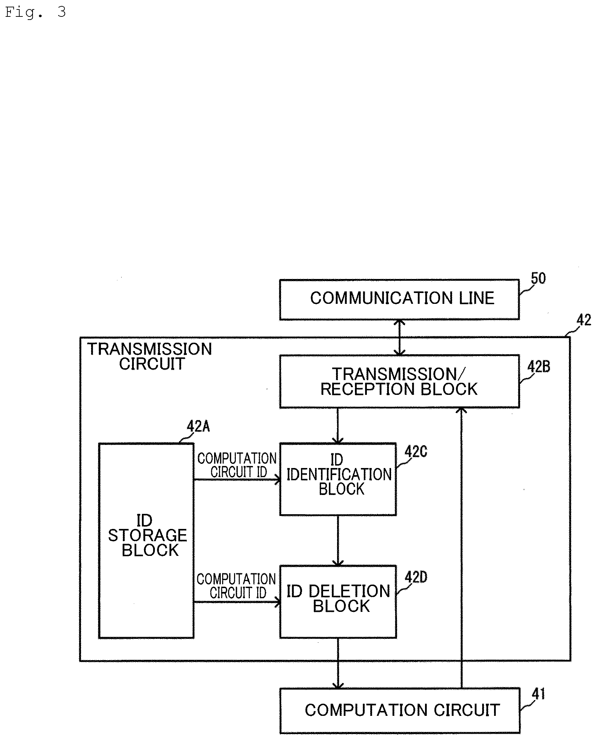

As shown in Fig. 3, the transmission circuit 42 includes an ID storage block 42A, a transmission/reception block 42B, an ID determination block 42C, and an ID deletion block 42D. Various types of data output to the communication line 50 are input to the transmission circuit 42 without being limited to the above ID-tagged data and the data body which is the final processing result.

The ID storage block 42A stores the computation circuit ID of the computation circuit 41 in the same computation unit 40. For example, the ID storage block 42A of the computation unit 40-1 stores the computation circuit ID "#1" of the computation circuit 41-1.

The transmission/reception block 42B sends various types of data input into the transmission circuit 42 to the ID determination block 42C in accordance with an implemented protocol.

The ID determination block 42C extracts the head computation circuit ID of the data from the transmission/reception block 42B. The ID determination block 42C determines whether the extracted computation circuit ID matches the computation circuit ID stored in the ID storage block 42A. In a case where the computation circuit ID cannot be extracted, or a case where the result of the comparison shows that both IDs do not match, the data sent to the computation unit 40 is not to be processed by the computation circuit 41 of the computation unit 40. In this case, the ID determination block 42C discards the input data without supplying it to the next-stage ID deletion block 42D. On the other hand, in a case where both IDs match, the data sent to the computation unit 40 is ID-tagged data and is to be processed by the computation circuit 41 of the computation unit 40. In this case, the ID determination block 42C sends the ID-tagged data to the next-stage ID deletion block 42D. When the head computation circuit ID of the ID-tagged data is "#1," the ID-tagged data is sent to the computation circuit 41-1 as will be described later only by the transmission circuit 42-1 of the computation unit 40-1. In this way, the ID-tagged data is transmitted to the computation circuit 41 identified by the head computation circuit ID.

The ID deletion block 42D deletes a computation circuit ID integrated with the computation circuit ID stored in the ID storage block 42A from the ID determination block 42C, and sends the deleted ID-tagged data to the computation circuit 41.

When the ID-tagged data or the final processing result that is a data body to which the computation circuit ID is not imparted is received from the computation circuit 41, the transmission/reception block 42B outputs the received data to the communication line 50. The ID-tagged data is transmitted to the computation circuit 41 of the head computation circuit ID by each transmission circuit 42. The final processing result is transmitted to the main storage device 31 of the storage unit 30. The transmission/reception block 42B transmits, for example, the data of the processing result to which the address of the main storage device 31 is imparted.

In this embodiment, although an example in which only the processes A and B are executed by a program, that is, an example in which the computation circuits 41-1 and 41-2 are connected to each other and process flows of the processes A and B are sequentially executed by these circuits, the number of processes need only be any number without being limited to two. The computation circuit to be used need only be determined according to the number of processes and the type of process. For example, the computation circuit 41-1, the computation circuit 41-2, and the computation circuit 41-3 that executes the process N may be connected to each other, and the process A, the process B, and the process N may be sequentially executed by these circuits. A plurality of computation circuits of the same type or different types need only be "connected" to each other, and a plurality of processes designated by a program to be executed need only be sequentially executed by the plurality of computation circuits 41 connected to each other. A plurality of computation circuits of the same type or different types are "connected" to each other, and a plurality of processes designated by a program to be executed are sequentially executed by the plurality of computation circuits 41 connected to each other, so that various processes designated by the program can be executed with almost no load on the control unit 20.

### (Effect and modification example)

In this embodiment, a unique computation circuit ID is imparted to each computation circuit 41, and when a plurality of processes of a program are sequentially performed by the plurality of computation circuits 41, the processing data (data body) is transmitted and received between the computation circuits 41 on the basis of the computation circuit ID. Therefore, there is no writing of data (data body) after processing in a certain computation circuit 41 to the storage unit 30, particularly, the main storage device 31, and no transfer from the main storage device 31 to the computation circuit 41-2. In addition, no bottleneck occurs in data transfer performed by the control unit 20. Therefore, improvement in the throughput of the computer 10 is realized. Further, effects such as low power consumption, reduced latency, lightweight programs, improved computer stability, improved usability, and the like can also be obtained.

In this embodiment, the control unit 20 imparts the computation circuit ID to the processing data (data body), but a dedicated module may be prepared for this impartment. The computation circuit ID may be defined and imparted by a program as described above, or may be created and imparted by a compiler.

Any communication protocol may be used in the control unit 20, the storage unit 30, the computation unit 40 (especially, the transmission circuit 42), and the communication line 50, and TCP/IP using the addresses of IPv4 and/or IPv6 as computation circuit IDs, or a network layer service chaining protocol may be used. In addition, the control unit 20, the storage unit 30, the computation unit 40 (especially, the transmission circuit 42), and the communication line 50 may be connected to each other according to Ethernet standards, Compute Express Link (CXL), Gen-Z, or the like. The transmission circuit 42 may be separately provided outside of the computation unit 40 such as an FPGA. In this case, the transmission circuit 42 may use a processor bus, a PCIe bridge function, or the like. The transmission circuit 42 may be a router or the like.

The computation circuit 41 may be constituted by a processor such as a CPU. In this case, a storage unit (not shown) may be provided inside or outside the transmission circuit 42, and subprograms for the computation circuit 41 to operate as each of the above blocks may be stored in this storage unit. The computation circuit 41 and storage unit may be connected to the communication line 50, and the subprograms may be supplied to the computation circuit 41 through the communication line 50. The program is supplied to the computation circuit 41 through the communication line 50. As another example, the computation circuit 41 may be a GPU or the like. In this case, a processor that controls the operation of the GPU and a set of storage units that store programs executed by the processor may be provided inside or outside the transmission circuit 42. The processor and storage units may be connected to the communication line 50, and the program may be supplied to the processor through the communication line 50.

In this embodiment, the computation circuit IDs are "#1" to "#N" for convenience, but an IP address, a MAC address, or the like may be used as the computation circuit ID.

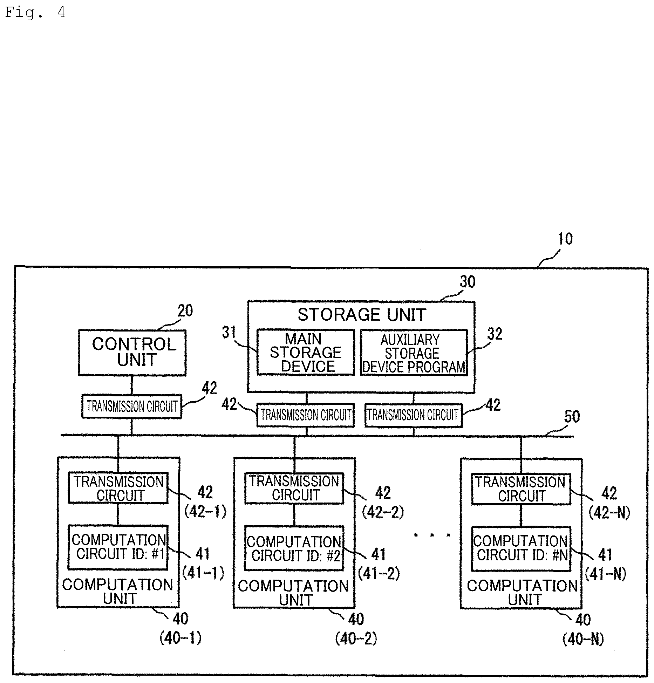

The transmission circuit 42 may be imparted to each module of the computer 10. For example, as shown in Fig. 4, the control unit 20 and the storage unit 30 may be connected to the communication line 50 through the transmission circuit 42. In this case, the ID storage block 42A of the transmission circuit 42 connected to the control unit 20 stores the address of the control unit 20 or the like instead of the computation circuit ID. The ID storage block 42A of the transmission circuit 42 connected to the storage unit 30 (the main storage device 31 and the auxiliary storage device 32) stores the address of the main storage device 31 or the auxiliary storage device 32 or the like instead of the computation circuit ID.

### [Second embodiment]

In the present embodiment, a process ID for identifying each process is set in the processing unit of a program, and the process ID of a process to be executed by the computation circuit having the computation circuit ID is imparted to the processing data together with the computation circuit ID.

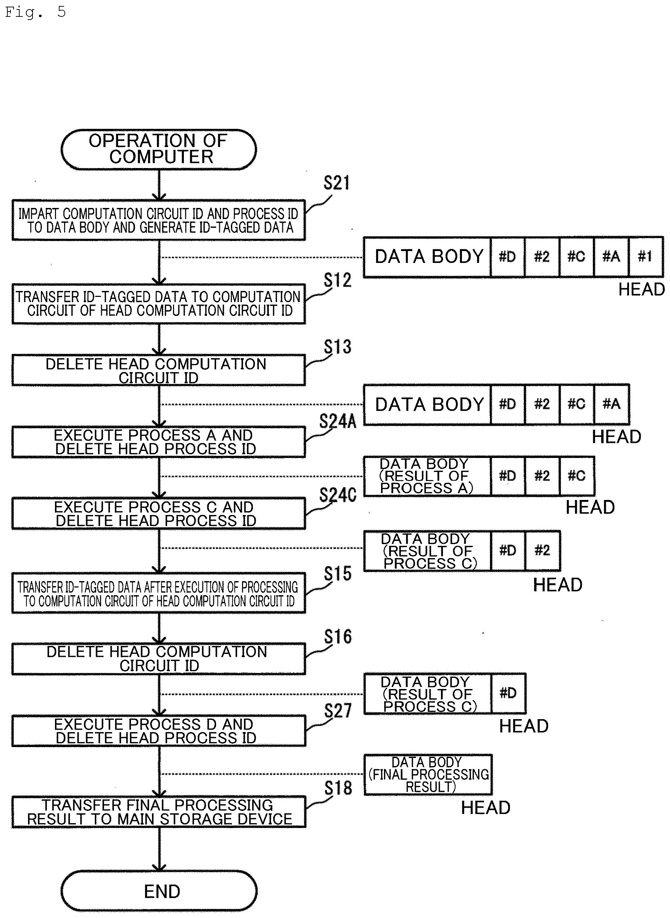

Hereinafter, the present embodiment will be described with reference to Figs. 5 to 7. Meanwhile, description overlapping with that in the first embodiment will be omitted appropriately. The omission of description is the same for a third embodiment and subsequent embodiments, and the description of a certain embodiment overlapping with the previous embodiment will be omitted appropriately. A computer according to a second embodiment has the same device configuration as the computer 10 shown in Fig. 1. However, here, the computation circuit 41-1 can execute the process A, the process B, and a process C, and the computation circuit 41-2 can execute a process D. Hereinafter, the computer according to the second embodiment is also referred to as a computer 110. It is assumed that "#A" to "#D" are set as process IDs for the process A to the process D, respectively.

### (Operation example of computer 110)

Hereinafter, an example in which the computer 110 executes process A → process C → process D on processing data to be processed will be described with reference to Figs. 1 and 5. In the processing of Fig. 5, the control unit 20 imparts the computation circuit ID of the computation circuit 41 to be processed and the process ID of a process to be executed by the computation circuit 41 to the processing data serving as a data body in accordance with a program (step S21). Here, the computation circuit ID "#1," the process IDs "#A" and "#C," the computation circuit ID "#2," and the process ID "#D" are imparted in order from the head. The imparted IDs are lined up from the head in order of processing with the computation circuit ID of the computation circuit 41 and one or a plurality of process IDs to be executed by the computation circuit 41 as one set. In addition, a plurality of process IDs in one set are also lined up from the head side in the order of process execution. The data body and each ID imparted to the data body as a whole are also referred to as ID-tagged data as above (hereinafter, the same applies to data to which other IDs are imparted). The format of the process ID is defined, and the computation circuit 41 or the like can recognize the location of the process ID or the like in the ID-tagged data.

After step S21, processes similar to steps S12 and S13 in Fig. 2 described above are performed. That is, the ID-tagged data is transferred to the computation circuit 41-1 with the head "#1" of the ID-tagged data as a computation circuit ID, and at that time, the "#1" is deleted in the transmission circuit 42-1.

Thereafter, the computation circuit 41-1 executes the process A indicated by the head process ID "#A" on the data body, and deletes the "#A" (step S24A). Thereafter, the computation circuit 41-1 sets the processing result of the process A as a new data body, executes the process C indicated by the current head process ID "#C" on this data body, and deletes the "#C" (step S24B). Thereby, the processing data after the process C is obtained as the data body.

Thereafter, the processing data after the process C is used as the data body, and the same processes as steps S15 and S16 in Fig. 2 described above are performed on the ID-tagged data with "#2" and "#D" remaining. That is, the ID-tagged data is transferred to the computation circuit 41-2, and the head computation circuit ID is deleted by the transmission circuit 42-2. With the deletion of the computation circuit ID, the ID-tagged data input to the computation circuit 41-2 has the process ID "#D" at the head in addition to the data body.

Thereafter, the computation circuit 41-2 executes the process D on the processing data and deletes "#D" (step S27). Thereafter, the same process as step S18 in Fig. 2 described above is executed, and the data body after the process D is transmitted to the main storage device 31 as the final processing result.

### (Detailed configuration and operation of computation circuit 41-1)

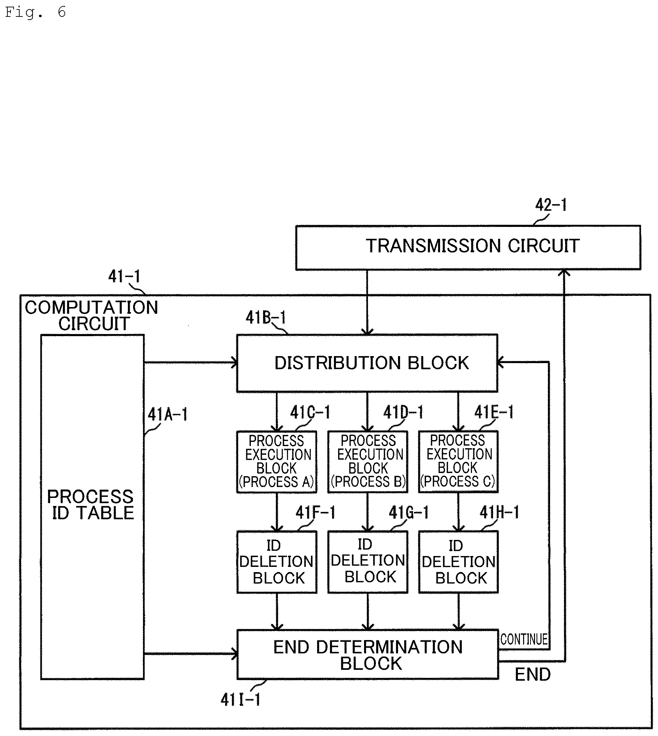

As shown in Fig. 6, the computation circuit 41-1 includes a process ID table 41A-1, a distribution block 41B-1, and process execution blocks 41C-1 to 41E-1 that execute the processes A to C, respectively. The computation circuit 41-1 further includes ID deletion blocks 41F-1 to 41H-1 that delete process IDs after the processes A to C, respectively, and an end determination block 411-1.

In the process ID table 41A-1, a process ID and specific information for specifying a process execution block that executes a process identified by the process ID are associated with each process ID. For example, the process ID "#A" is associated with the process execution block 41C-1 that executes the process A. The ID-tagged data input from the transmission circuit 42-1 to the computation circuit 41-1 is first input to the distribution block 41B-1. The distribution block 41B-1 refers to the process ID table 41A-1 using the head process ID in the ID-tagged data as a key, and acquires specific information corresponding to the process ID serving as a key. The distribution block 41B-1 inputs the ID-tagged data to the process execution block specified by the acquired specific information among the process execution blocks 41C-1 to 41E-1.

The process execution block 41C-1 executes the process A on the data body of the input ID-tagged data, and generates new ID-tagged data using the processing result of the process A as the data body. The process execution block 41C-1 inputs the generated ID-tagged data to the latter-stage ID deletion block 41F-1. The ID deletion block 41F-1 deletes the head process ID ("#A") in the ID-tagged data, and outputs the deleted ID-tagged data to the end determination block 411-1.

Similarly, the process execution block 41D-1 executes the process B on the data body of the input ID-tagged data. The ID deletion block 41G-1 deletes the head process ID ("#B") in the ID-tagged data, and outputs the deleted ID-tagged data to the end determination block 411-1.

Similarly, the process execution block 41E-1 executes the process C on the data body of the input ID-tagged data. The ID deletion block 41H-1 deletes the head process ID ("#C") in the ID-tagged data, and outputs the deleted ID-tagged data to the end determination block 411-1.

Meanwhile, in a case where the executed process is the final process in the program, the data transmitted to the end determination block 41I-1 may be a data body (final processing result) to which no process ID or the like is imparted rather than the ID-tagged data.

The end determination block 41I-1 determines whether any of the process IDs in the process ID table 41A-1 is included in the received data (ID-tagged data or final processing result). In a case where it is included, the process continues, and thus the received data (ID-tagged data) is input again to the distribution block 41B-1. On the other hand, in the case of no match, the received data (ID-tagged data or final processing result) is output to the transmission circuit 42.

As described above, in a case where the process A, the process C, and the process D are executed, in the computation circuit 41-1, the process A is performed on the ID-tagged processing data by the process execution block 41C-1 and the process ID "#A" is deleted by the ID deletion block 41F-1. Further, the process C is performed on the ID-tagged processing data by the process execution block 41E-1 and the process ID "#C" is deleted by the ID deletion block 41H-1.

### (Detailed configuration and operation of computation circuit 41-2)

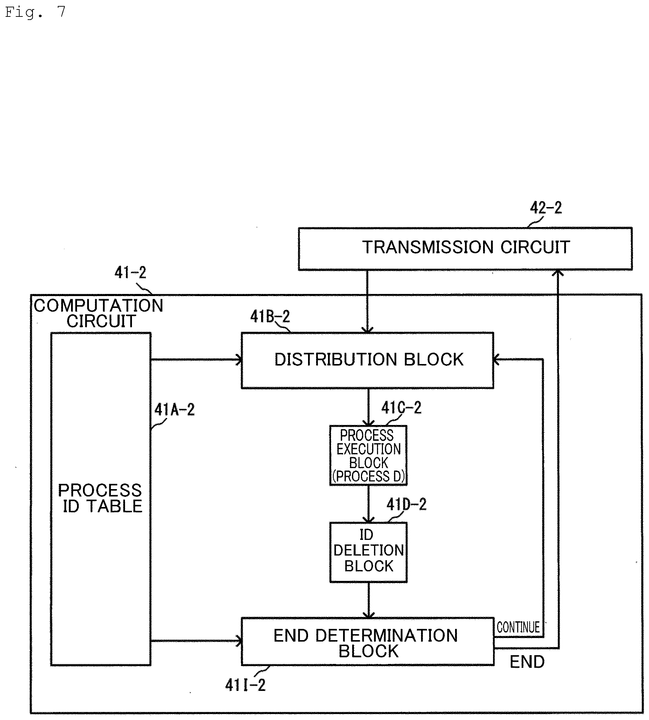

As shown in Fig. 7, the computation circuit 41-2 includes a process ID table 41A-2, a distribution block 41B-2, and a process execution block 41C-2 that executes the process D. The computation circuit 41-2 further includes an ID deletion block 41D-2 that deletes the process ID after the process D, and an end determination block 41I-2. In the process ID table 41A-2, the process ID "#D" of the process D and specific information for specifying the process execution block 41C-2 that executes the process D are associated with each other. Other configurations are the same as those of the computation circuit 41-1, and thus detailed description thereof will be omitted. In a case where the ID-tagged data has "#D" as the process ID, the process D is executed by the computation circuit 41-2.

### (Effect and modification example)

In this embodiment, it is possible to implement a plurality of processes in one computation circuit 41, and there is an advantage of increasing circuit utilization efficiency in a device such as, for example, an FPGA.

In this embodiment, #A to #D are used as process IDs. The process ID is not limited to this, and may be, for example, an IP address, a MAC address, or a simple numerical value. Further, the process ID may be configured to indicate the position of a portion that executes a process like a memory pointer.

### [Third embodiment]

In the present embodiment, parallel processing in the computation circuit 41 is enabled by inserting a parallel tag for designating parallel execution of processing in addition of the process ID.

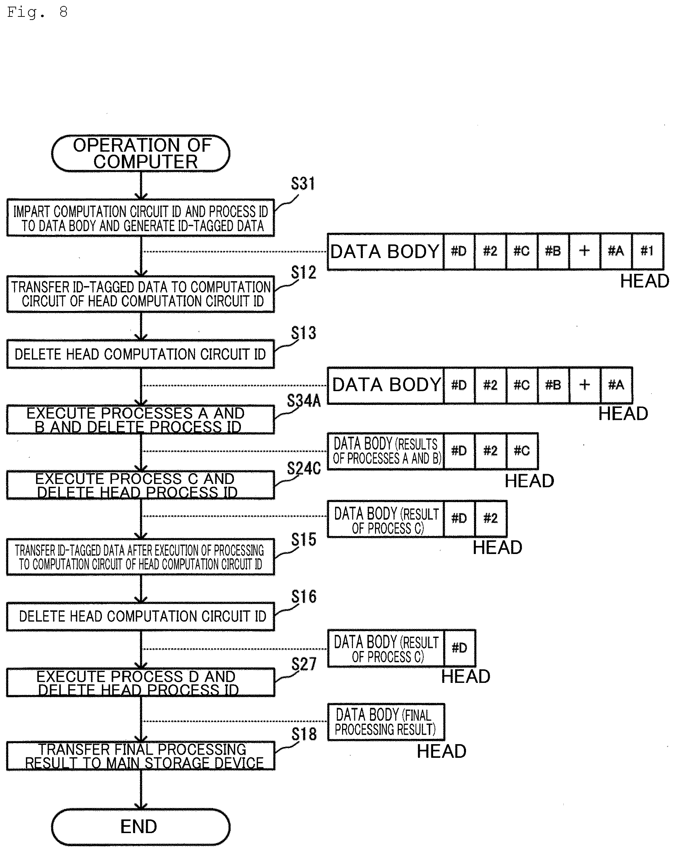

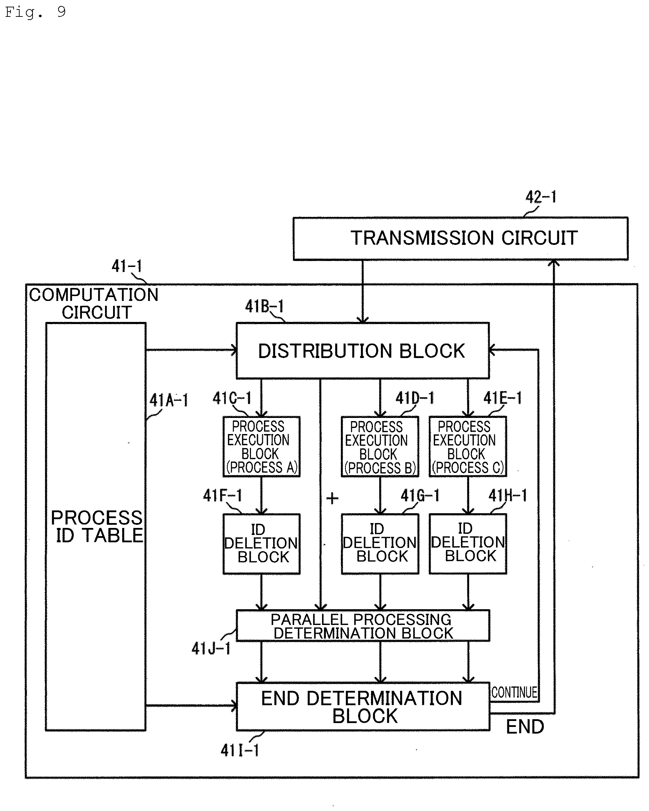

Hereinafter, the present embodiment will be described with reference to Figs. 8 and 9. A computer according to a third embodiment has the same device configuration as the above computer 110. However, the computation circuit 41-1 can execute the process A and the process B in parallel. Hereinafter, the computer according to the third embodiment is also referred to as a computer 210.

### (Operation example of computer 210)

Hereinafter, an example in which the computer 210 executes the process A and the process B in parallel on processing data to be processed, and then sequentially executes the process C and the process D will be described with reference to Figs. 1 and 8. In the processing shown in Fig. 8, the control unit 20 imparts the computation circuit ID of the computation circuit 41 to be processed and the process ID of a process to be executed by the computation circuit 41 to the processing data serving as a data body in accordance with a program (step S31). Here, the computation circuit ID "#1," the process IDs "#A" to "#C," the computation circuit ID "#2," and the process ID "#D" are imparted in order from the head. However, since the process A and the process B are executed in parallel here, the control unit 20 inserts a parallel tag "+" indicating parallel execution between "#A" and "#B" for identifying the processes A and B, respectively. Here, "+" indicates that two processes identified by the process IDs before and after that are executed in parallel.

After step S31, the same processes as steps S12 and S13 in Figs. 2 and 5 described above are performed. Thereafter, the computation circuit 41-1 determines whether there is a tag "+" immediately after the head process ID "#A." In a case where there is no tag "+," the process A identified by "#A" is executed, but since there is "+" here, the process A and the process B identified by the process IDs "#A" and "#B" before and after the tag "+" are executed in parallel on the data body of the ID-tagged data (step S34A). Further, "#A," "+," and "#B" are deleted (step S34A). Thereafter, this processing result is used as a new data body, and on the basis of the ID-tagged data from which "#A," "+," and "#B" are deleted, the same process as step S24C in Fig. 5 is performed, and the same processes as steps S15, S16, S27, and S18 in Figs. 2 and 5 are performed. Meanwhile, the above determination is also performed in step S24C. The process C and the process D are executed through the above processed.

### (Detailed configuration and operation of computation circuit 41-1)

As shown in Fig. 9, the computation circuit 41-1 includes a parallel processing determination block 41J-1 in addition to the configuration of the computation circuit 41-1 according to the second embodiment (see Fig. 6). In addition, a flag indicating that parallel processing is performed can be supplied from the distribution block 41B-1 to the parallel processing determination block 41J-1. The distribution block 41B-1 determines whether there is a tag "+" immediately after the head process ID of the ID-tagged data, and in a case where there is the tag "+," the flag is supplied to the parallel processing determination block 41J-1. In addition, the distribution block 41B-1 refers to the process ID table 41A-1, and acquires specific information corresponding to the process IDs before and after the tag "+" in the ID-tagged data. Here, specific information for specifying each of the process execution blocks 41C-1 and 41D-1 is acquired. In this case, the distribution block 41B-1 inputs the data body to the process execution blocks 41C-1 and 41D-1, whereby the processes A and B are executed in parallel. The distribution block 41B-1 may divide the data body and input it to the process execution blocks 41C-1 and 41D-1 in accordance with the processing content, or may input the data body as it is to the process execution blocks 41C-1 and 41D-1.

In the above parallel execution, the process A and the process B may have different execution times. When the flag is supplied, the parallel processing determination block 41J-1 holds the processing result until both the process A and the process B which are being executed in parallel are completed, and when both the process A and the process B are completed, it outputs the parallel processing results of the process A and the process B to the end determination block 41I-1.

### (Effect and modification example)

With the configuration as described above, it is possible to perform parallel processing using hardware such as, for example, an FPGA, and to reduce the latency of the entire processing.

The parallel processing is not limited only to the parallel execution of consecutive processes such as the processes A and B. For example, in a case where the process A and the process C can be executed in parallel, "#A," "+," "#C," "#B," and the like may be lined up from the head. Further, three or more processes may be executed in parallel. For example, three or more parallel executions are possible by inserting a plurality of tags such as "#A," "+," "#B," "+," and "#C." Further, parallel execution may be represented by a numerical value such as "+2," which indicates the number of process IDs to be executed in parallel. In the case of "+2," the processes of two process IDs following the numerical value are to be executed in parallel.

### [Fourth embodiment]

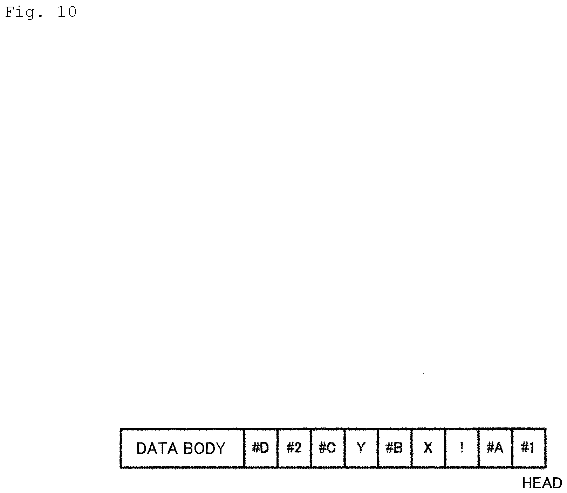

In addition to or instead of the parallel tag of the third embodiment, a branch tag indicating the branching of processing may be adopted. For example, it is assumed that, in a case where the above the process A to the process D are executed, the process B is executed when the result of the process A is X, and the process C is executed when the result of the process A is Y. In this case, as shown in Fig. 10, "#1," "#A," "!," "X," "#B," "Y," "#C," "#2," and "#D" are imparted to the data body from the head. Here, "!" after "#A" indicates a branch of the process A. The subsequent "X," together with "#B" that follows, designates that the process B is to be executed in a case where the processing result of the process A is the processing result corresponding to "X." "Y," together with the subsequent "#C," designates that the process C is to be executed in a case where the processing result of the process A is the processing result corresponding to "Y." The computation circuit 41-1 to which ID-tagged data with "#1" deleted by the transmission circuit 42-1 is input executes the process A in accordance with "#A" and deletes "#A." The computation circuit 41-1 then reads up to "X," "#B," "Y," and "#C" in accordance with "!," and executes the process B when the processing result of the process A is the result corresponding to X. The computation circuit 41-1 executes the process C when the processing result is Y.

The configuration of the computation circuit 41-1 may be, for example, the same as that in Fig. 6. For example, after the process A, the end determination block 41I-1 uses the processing result after the process A as the data body, and inputs ID-tagged data to which "!," "X," "#B," "Y," "#C," "#2," and "#D" are imparted to the distribution block 41B-1. The distribution block 41B-1 reads the heads "!," "X," "#B," "Y," and "#C" of the input ID-tagged data, and determines whether the data body which is the processing result of the process A is data corresponding to X or data corresponding to Y. When the processing result is X, the distribution block 41B-1 refers to the process ID table, and inputs the ID-tagged data to the process execution block 41D-1 corresponding to "#B." At this time, the distribution block 41B-1 deletes "!," "X," "Y," and "#C" from the ID-tagged data.

When the processing result is Y, the distribution block 41B-1 refers to the process ID table, and inputs the ID-tagged data to the process execution block 41E-1 corresponding to "#C." At this time, the distribution block 41B-1 deletes "!," "X," "#B," and "Y" from the ID-tagged data. Meanwhile, in a case where the processing result does not correspond to both "X" and "Y," an abnormality is assumed to have occurred, and the entire series of processes based on a program may end.

As described above, in this embodiment, branch processing can be executed in the computation circuit 41 by inserting a branch tag. Branching may be performed across a plurality of computation circuits 41. A tag to be inserted is not limited to a branch tag, and various tags may be used. For example, a tag or the like for executing loop processing may be prepared.

### [Fifth embodiment]

In the present embodiment, instead of the process ID and various tags, a data ID (an ID determined in accordance with processing of the data body or the like) for identifying the data body is imparted to the data body. Each computation circuit 41 executes processing on the basis of the data ID. In the above, a process ID or the like imparted to the data body, but as the number of processes increases, the amount of ID-tagged data increases, which causes a reduction in the throughput of the computer. In the present embodiment, individual data IDs are imparted to the processing data serving as the data body, and processing required for each data ID is held in a table by the computation circuit 41, thereby reducing the amount of data to be imparted to the processing data.

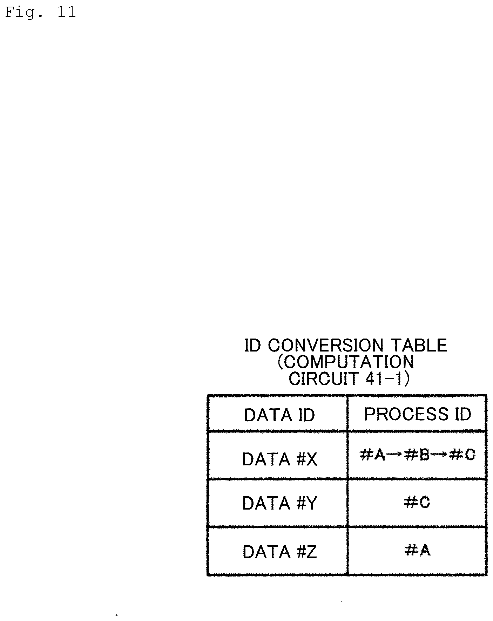

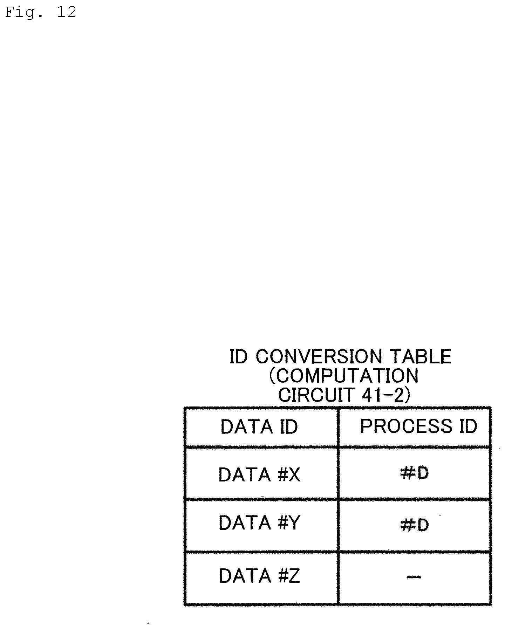

Hereinafter, the present embodiment will be described with a focus on handling of data IDs. A computer according to a fifth embodiment has the same device configuration as the computer 10 shown in Fig. 1. However, here, the computation circuit 41-1 can execute the process A, the process B, and the process C, and the computation circuit 41-2 can execute the process D. Hereinafter, the computer according to the fifth embodiment is also referred to as a computer 410. It is assumed that "#A" to "#D" are set as process IDs for the process A to the process D, respectively. In addition, it is assumed here that "data #X" to "data #Z" are set as data IDs. Each computation circuit 41 is assumed to store an ID correspondence table indicating the correspondence relation between data IDs and process IDs. For example, the computation circuit 41-1 has an ID conversion table shown in Fig. 11. The computation circuit 41-2 has an ID conversion table shown in Fig. 12. In each ID conversion table, each data ID is associated with a process ID of a process that can be executed by the computation circuit 41 having the ID conversion table. The format of the data ID is defined, and the computation circuit 41 or the like can recognize the location of the data ID or the like in the ID-tagged data.

### (Operation example of computer 410)

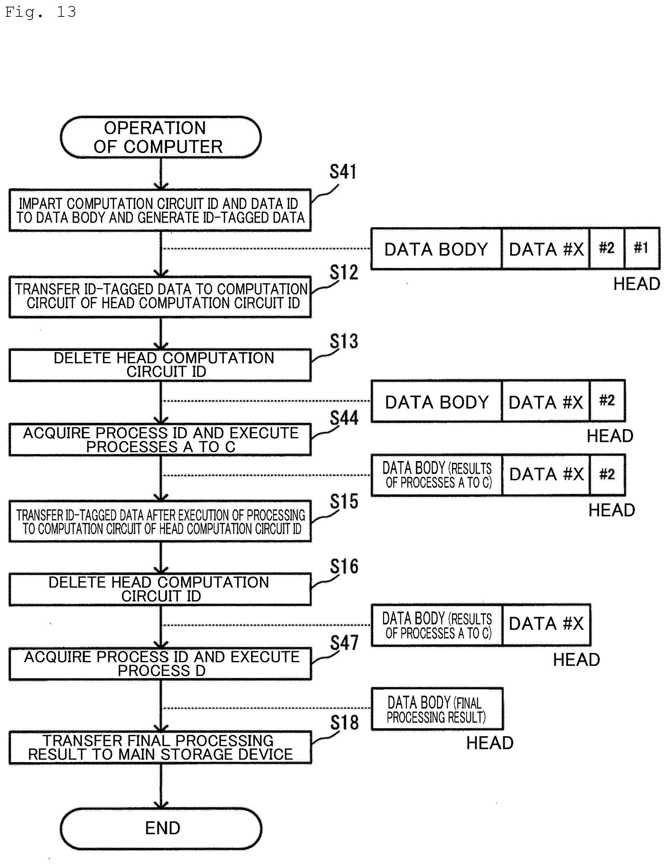

An operation example of the computer 410 will be described with reference to Figs. 1 and 13. Here, it is assumed that the process A to the process C are executed by the computation circuit 41-1, and the process D is executed by the computation circuit 41-2. In the processing of Fig. 13, the control unit 20 imparts, in accordance with a program, the computation circuit ID of the computation circuit 41 to be processed and a data ID that can specify processing to be executed by the computation circuit 41 to the processing data serving as the data body (step S41). Here, it is assumed that the computation circuit ID "#1," the computation circuit ID "#2," and "data #X" serving as a data ID are imparted in order from the head.

After step S41, the processes as steps S12 and S13 in Fig. 2 described above are performed. That is, the ID-tagged data is transferred to the computation circuit 41-1 with the head "#1" of the ID-tagged data as a computation circuit ID, and at that time, the "#1" is deleted in the transmission circuit 42-1.

Thereafter, the computation circuit 41-1 refers to the ID conversion table shown in Fig. 11 using the data ID of the ID-tagged data as a key, and acquires the process ID associated with the data ID (step S44). Here, since the data ID is "data #X," "#A" to "#C" corresponding to this are acquired. The computation circuit 41-1 sequentially executes the process A, the process B, and the process C which are identified by the acquired process ID.

Thereafter, the processing data after the process C is used as the data body, and the same processes as steps S15 and S16 in Fig. 2 described above are performed on the ID-tagged data with "#2" and "data #X" remaining. That is, the ID-tagged data is transferred to the computation circuit 41-2, and the head computation circuit ID "#2" is deleted by the transmission circuit 42-2. With the deletion of the computation circuit ID, the ID-tagged data input to the computation circuit 41-2 has "data #X" at the head in addition to the data body.

Thereafter, the computation circuit 41-2 refers to the ID conversion table shown in Fig. 12 using the data ID of the ID-tagged data as a key, and acquires the process ID associated with this data ID (step S47). Here, since the data ID is "data #X," "#D" corresponding to this is acquired. The computation circuit 41-1 executes the process D which is identified by the acquired process ID. Thereafter, the same process as step S18 in Fig. 2 described above is executed, and the data body after the process D is transmitted to the main storage device 31 as the final processing result. At this time, the data ID may or may not be deleted.

### (Detailed configuration and operation of computation circuit 41-1)

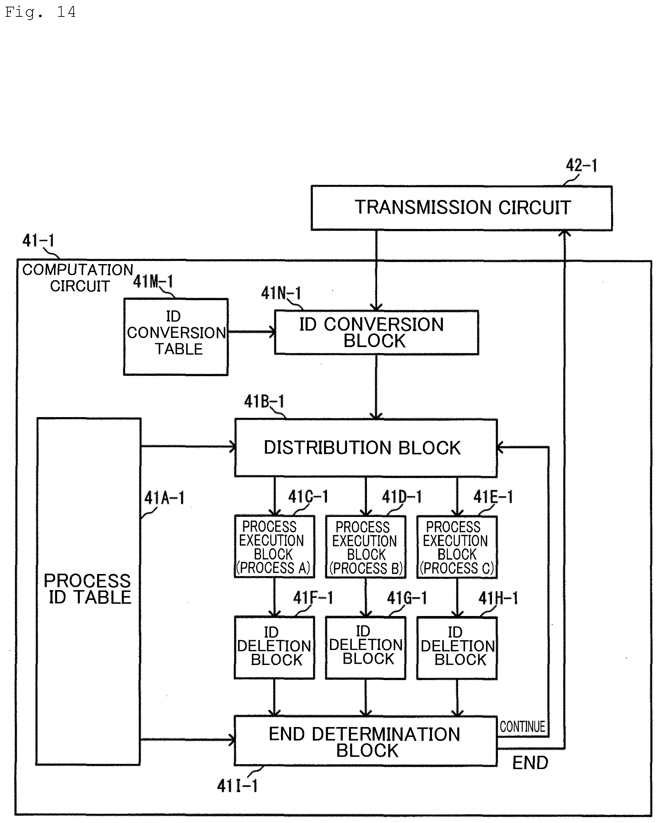

As shown in Fig. 14, the computation circuit 41-1 includes an ID conversion table 41M-1 and an ID conversion block 41N-1 shown in Fig. 11 in addition to each block shown in Fig. 6. Such a configuration is the same for other computation circuits 41. The ID-tagged data supplied from the transmission circuit 42-1 is input to the ID conversion block 41N-1. The ID conversion block 41N-1 refers to the ID conversion table 41M-1 and acquires the process ID corresponding to the data ID in the ID-tagged data. The ID conversion block 41N-1 imparts the acquired process ID to the ID-tagged data from the head in the order of processing (which is also assumed to be defined in the ID conversion table 41M-1), and outputs the ID-tagged data after impartment to the distribution block 41B-1. The distribution block 41B-1 performs the same operation as above, refers to the process ID table 41A-1, and outputs the ID-tagged data to the process execution block corresponding to the process ID. Thereby, the execution of the process A or the like is realized.

Meanwhile, the computation circuit 41 may include an ID conversion table and an ID conversion block in addition to each block shown in Fig. 8 and the like. In such a case, information associated with the data ID in the ID conversion table may include information for performing parallel processing, branching, and the like in addition to the process ID.

### (Effect and modification example)

With the above configuration, the processing content is included in the table, whereby a process ID or the like for designating the processing content is not required to be imparted to the ID-tagged data, and thus it is possible to suppress the amount of the ID-tagged data and, as a result, to suppress a decrease in throughput.

The data ID may be prepared individually for each computation circuit 41. The ID conversion table need only be configured to specify processing to be executed by each computation circuit 41 using the data ID as a key. For example, the ID conversion table may store the address of the process execution block in format of a pointer, or may store information in a form that enables routing of the execution destination of the processing in the computation circuit 41 in the format of next hop.

The data ID may, for example, be explicitly written in a program in advance by a user and stored in the storage unit.

### [Sixth embodiment]

In the present embodiment, a plurality of user process requests or a plurality of program tasks are processed. A computer according to this embodiment is also referred to as a computer 510. The device configuration of the computer 510 is the same as in Fig. 1. For example, a user A requests the execution of the processes A to D, and a user B requests the execution of the processes C and D. It is assumed that the user's process execution request is input to the computer 510 through a network or the like together with processing data. As above, the processes A to C are executed by the computation circuit 41-1, and the process D is executed by the computation circuit 41-2. The ID-tagged data related to the user A's request includes data #X as the data ID, and the ID-tagged data related to the user B's request includes data #Y as the data ID. In addition, data #X is prepared for the user A, and data #Y is prepared for the user B. That is, user differences are specified by the data ID.

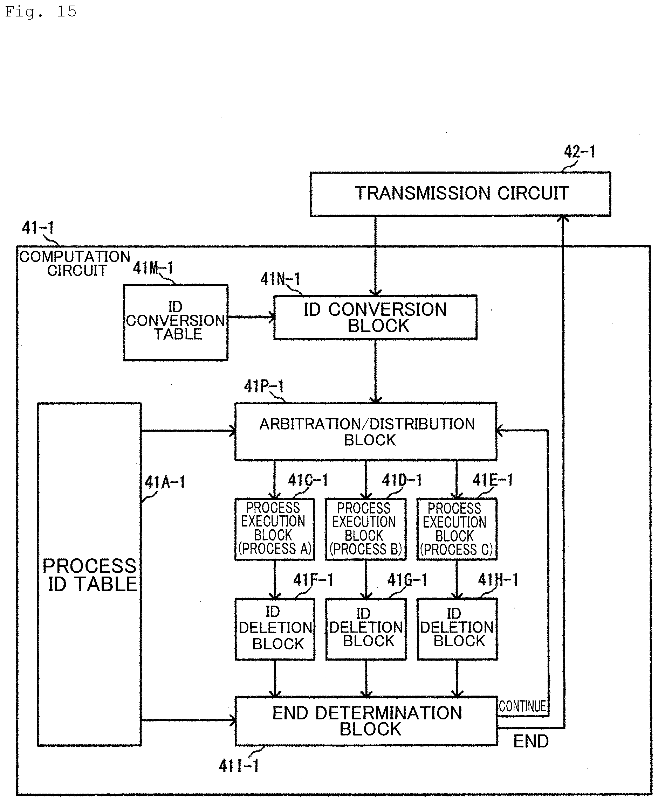

As shown in Fig. 15, the computation circuit 41-1 of the present embodiment has the same configuration as the configuration of Fig. 14, but includes an arbitration/distribution block 41P-1 instead of the distribution block 41B-1 of Fig. 14. Timings of processing requests from a plurality of users and the like may overlap. That is, process requests may conflict. Therefore, the arbitration/distribution block 41P-1 arbitrates the process requests, preferentially executes any of the conflicting process requests, or waits for execution. Figs. 11 and 12 are used as the ID conversion table. When the user A's ID-tagged data and the user B's ID-tagged data are input simultaneously, the arbitration/distribution block 41P-1 compares the data IDs of the ID-tagged data and determines the priority of the processing data. The priority is set for each data ID, and the arbitration/distribution block 41P-1 determines the priority on the basis of this setting. The arbitration/distribution block 41P-1 outputs the ID-tagged data to the process execution block in the order of higher priority.

### (Effect and modification example)

With the configuration as described above, a plurality of user or program tasks can be executed simultaneously on a single computer.

In the ID conversion table, priority information such as processing priority may be associated with each data ID. In this case, the arbitration/distribution block 41P-1 may refer to the ID conversion table to acquire priority information, and execute arbitration processing on the basis of the acquired priority information.

### [Seventh embodiment]

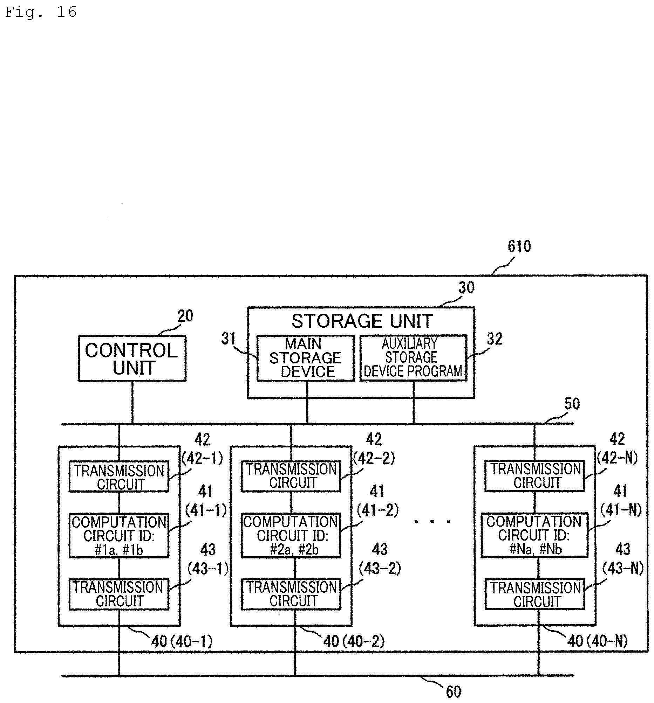

As shown in Fig. 16, a computer 610 according to the present embodiment has basically the same configuration as that of Fig. 1, but each computation unit 40 includes a transmission circuit 43 connected to the computation circuit 41 and a communication line 60 connected to an external network in addition to the computation circuit 41 and the transmission circuit 42. In a case where the transmission circuit 43 is distinguished by the computation circuit ID of the computation circuit 41 which is a connection destination, the transmission circuit 43 is also referred to as transmission circuits 43-1 to 43-N.

In this embodiment, the computation circuit ID included in the ID-tagged data transferred from the communication line 50 to the computation unit 40 and the computation circuit ID included in the ID-tagged data transferred from the communication line 60 to the computation unit 40 are different from each other even if they identify the same the computation circuit 41. For example, in the computation circuit 41-1, "#1a" is set as the computation circuit ID on the communication line 50 side, and "#1b" is set as the computation circuit ID on the communication line 60 side. Similarly, in the computation circuit 41-2, "#2a" is set as the computation circuit ID on the communication line 50 side, and "#2b" is set as the computation circuit ID on the communication line 60 side. In this way, it can be known from the computation circuit ID whether the ID-tagged data has been transferred through the communication line 50 or through the communication line 60.

In this embodiment, the transmission circuit 42 and 43 do not delete the computation circuit ID included in the ID-tagged data. For example, the computation circuit 41 separates and holds the head computation circuit ID from the ID-tagged data from the transmission circuit 42 or 43. Thereafter, the computation circuit 41 executes processing on the data body of the ID-tagged data in the same manner as above, and when new ID-tagged data obtained as a result of processing or the final processing result is returned to the transmission circuit 42 or 43, the computation circuit determines a return destination in accordance with the held computation circuit ID. For example, in a case where the held computation circuit ID is #1a, the ID-tagged data or the final processing result is returned to the transmission circuit 42, and in a case where the computation circuit ID is #1b, the ID-tagged data or the final processing result is returned to the transmission circuit 43.

As described above, by imparting a different computation circuit ID to each transfer path of ID-tagged data, it becomes possible to clarify from which path the data has been sent.

### [Eighth embodiment]

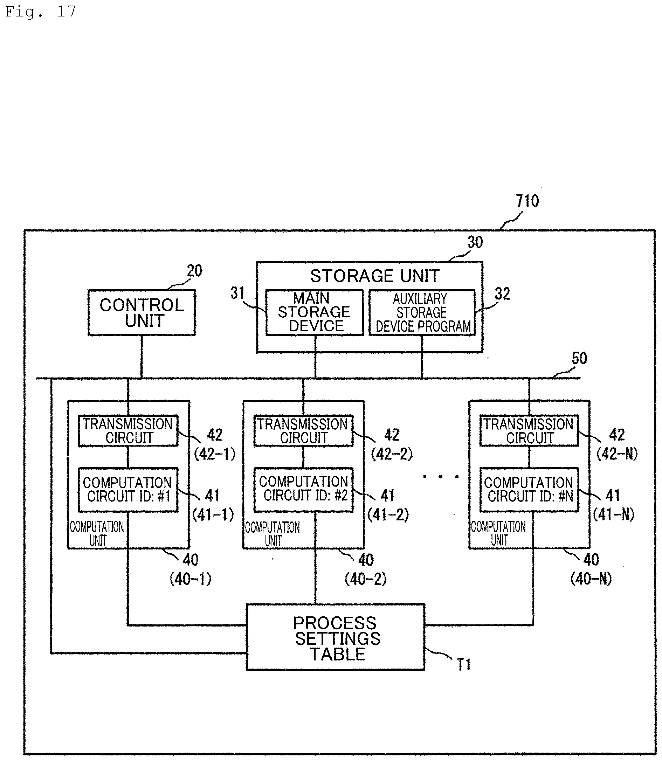

As shown in Fig. 17, a computer 710 according to the present embodiment includes a process settings table T1 in addition the control unit 20, the storage unit 30, and the computation unit 40. The process settings table T1 is stored in a storage unit accessible by the computation circuit 41 or the transmission circuit 42. The process settings table T1 may be stored in each computation unit 40, or may be stored in the storage unit 30. The configuration example of the process settings table T1 will be described later.

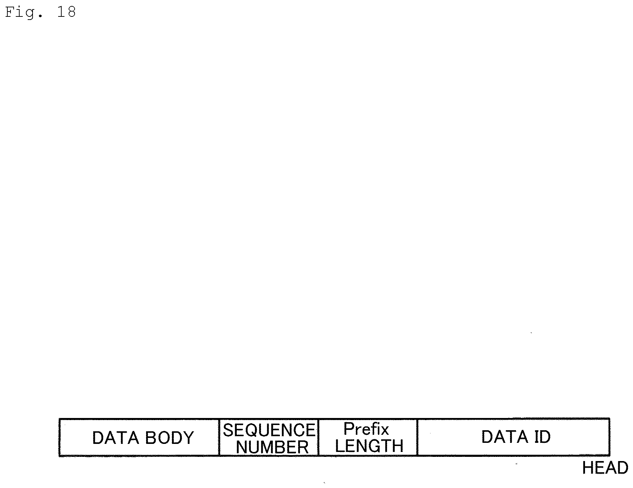

Fig. 18 shows ID-tagged data handled by the computer 710. The ID-tagged data includes a data body, and a data ID, prefix length, and sequence number imparted to the head of this data body. The data ID identifies the data body (that is, processing data to be processed). The data ID is also referred to as a data address. The prefix length indicates the data length of the data ID. The prefix length specifies the data ID in the ID-tagged data. The sequence number is a number indicating the current stage (the number of times the processing is executed) in the flow of processing. The computation circuit 41 increments this sequence number each time the processing is executed. The flow specifies which computation circuit (the computation circuit here is a concept including not only the computation circuit 41 but also a virtual computation unit to be described later such as a process execution block specified by a process ID; hereinafter, the same applies to computation circuits having no sign in this embodiment) processes the processing data in what order. The flow ID identifies the flow.

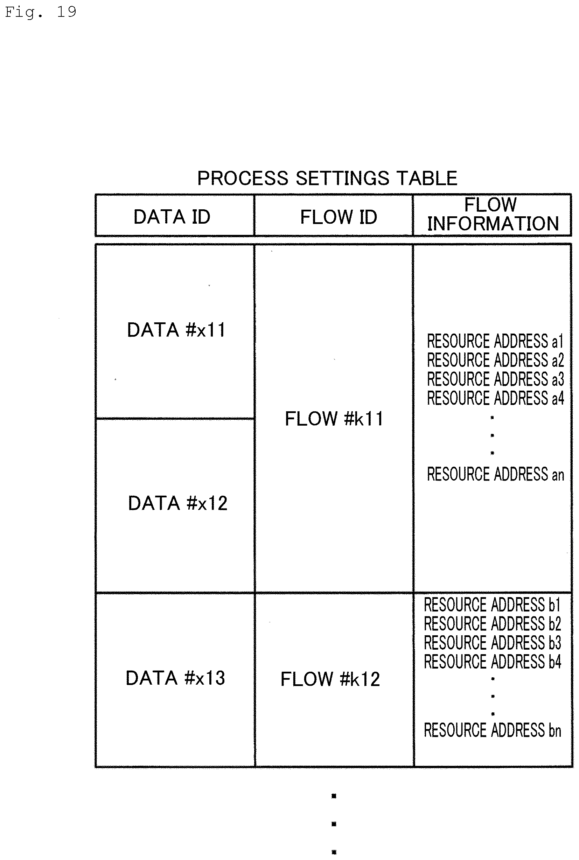

The process settings table T1 is table data for determining destinations for data transferred between a plurality of computation circuits that sequentially execute a plurality of processes on processing data, and has data IDs, flow IDs, and flow information associated with each other as shown in Fig. 19. The flow information is composed of a plurality of resource addresses (destinations for data described above) for identifying computation circuits (also including process execution blocks as described above) equivalent to the computation circuit IDs and process IDs. The resource addresses correspond to the order of processing, and here, they are lined up in the order of processing to indicate the content of the flow. The lineup order of resource addresses corresponds to the sequence number. For example, the third resource address specifies the computation circuit (the computation circuit 41; when the computation circuit 41 can execute a plurality of processes, the computation circuit and the process execution block therein) that executes the third process, and corresponds to the sequence number "3."

The ID-tagged data and the initial resource address need only be generated using any method. The ID-tagged data transferred between computation circuits is transferred together with a resource address. In a case where at least the information for specifying the computation circuit 41 included in the resource address is information for specifying the computation circuit 41 connected to the transmission circuit 42, the transmission circuit 42 transfers the resource address and ID-tagged data to the computation circuit 41. In a case where the information is not information for specifying the computation circuit 41 connected to the transmission circuit 42, the resource address and ID-tagged data are discarded. Thereby, the computation circuit 41 receives the resource address for designating itself and the ID-tagged data.

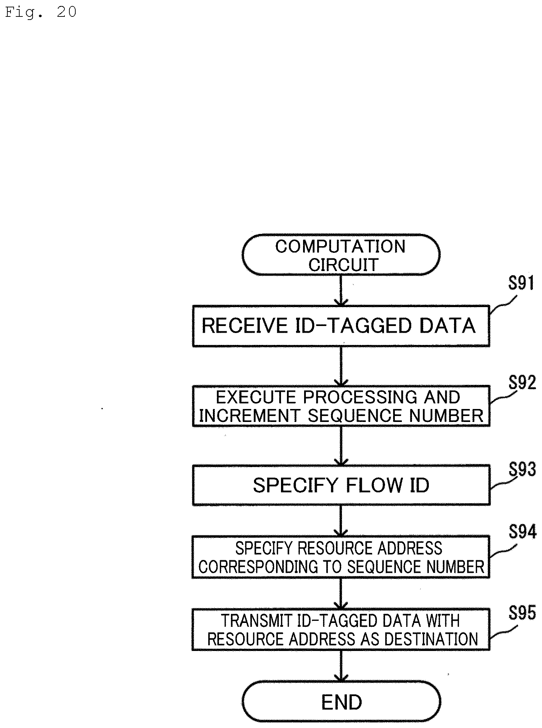

The computation circuit 41 (which may be a computation circuit having no sign) performs the processing shown in Fig. 20 when the resource address and the ID-tagged data are received from the communication line 50 through the transmission circuit 42. When the ID-tagged data is received (step S91), the computation circuit 41 processes the data body in the process designated by the resource address transmitted together with the ID-tagged data (such as the process in the process execution block 41C-1 or the like designated by the resource address), and increments the sequence number included in the ID-tagged data (step S92). Thereafter, the computation circuit 41 updates the data body to the processed data. The computation circuit 41 refers to the process settings table using the data ID included in the ID-tagged data as a key, and specifies the flow ID corresponding to the data ID (step S93). The computation circuit 41 specifies the resource address corresponding to the sequence number included in the ID-tagged data among the resource addresses included in the flow information corresponding to the specified flow ID in the process settings table (step S94). Thereafter, the computation circuit 41 transmits the ID-tagged data together with the resource address using the specified resource address as a destination, more specifically, using the address of the computation circuit specified by the resource address as a destination (step S95).

The data ID, flow ID, and resource address are all generated with a length of 128 bits equivalent to IPv6. Each ID and address consists of Prefix and Suffix, and the length of each is determined according to the type of ID or address. Each ID and address is managed by a predetermined address management device, and address assignment and the like are performed.

The data ID is issued to a device (such as a monitoring camera or a temperature sensor) from which the processing data originates, and is imparted to the data to be generated. For example, the data ID and Prefix length are acquired from the address management device, and each time the processing data is generated, the address is incremented within the range of Prefix, and an address is assigned to new data. The device from which the processing data originates places the data ID and Prefix length at the head of the data generated by the device itself (that is, the data body or the processing data) and transfers it to the computer 710.

When Prefix is full, and a request from a user, a change of data, a change of a process flow, or the like occurs, a new data address and Prefix length are issued from the address management device.

The resource address is determined, for example, on the basis of the location information (DC name, flow name, rack number, unit number) of the computer 710. The resource address may include an address having a Prefix length of 8 for specifying a computer cluster to which the computer 710 belongs, and an address having a Prefix length of 16 from Suffix for specifying each computer in the cluster. The resource address further includes an address having a Prefix length of 32 from Suffix of the computation circuit 41 in the computer 710, and an address having a Prefix length of 64 from Suffix of a virtual computation unit (such as the above process execution block) configured in the computation circuit 41. The resource address is determined on the basis of the location and type of resource each time a resource (computation circuit) is added. When the resource is deleted, the address is opened. The information for specifying a resource is associated with a resource address and managed by the address management device. The resource information includes various types of information such as clusters, computers, computation units, virtual computation units, processing details, and input/output regulations. In this way, since the resource address includes affiliation information indicating the affiliation of the device including a computation circuit and device information indicating the device including a computation circuit, the position of the computation circuit or the like can be ascertained by confirming the resource address. The resource address as a whole may be specified by IPv6, and the address of the computation circuit 41 in the resource address may be specified by IPv4.

The flow address may include the address of the data to be processed in the flow. The user defines which resources are to be used and in what order to process the data, and defines the data to be processed in the process flow. A flow address is imparted to this definition and stored in the flow management device.

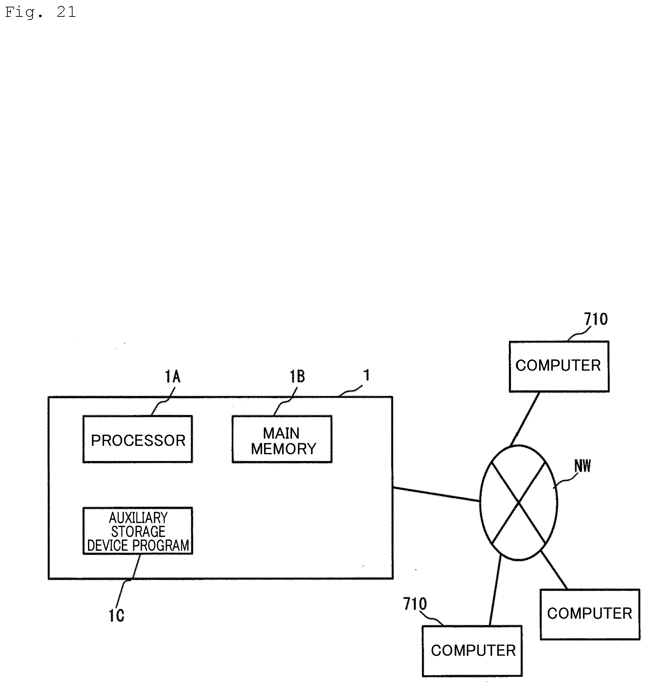

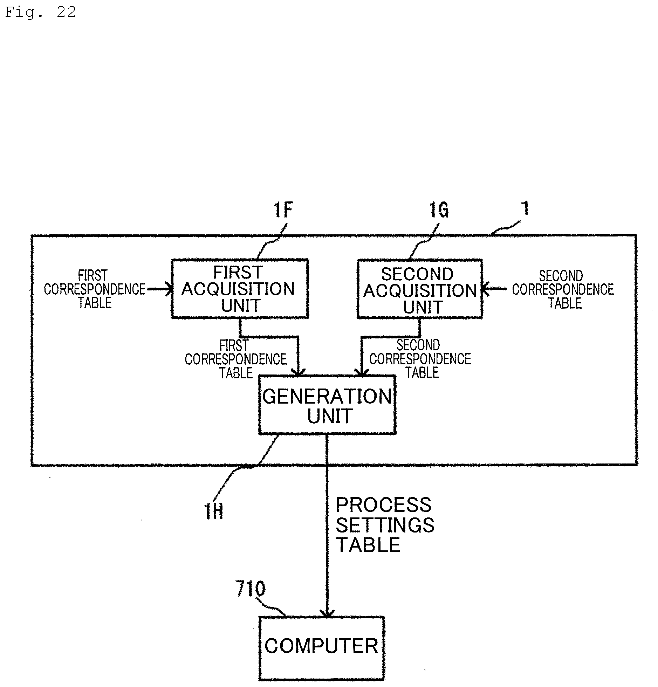

The process settings table is generated by a data generating device 1 shown in Fig. 21. The data generating device 1 is composed of a server computer or the like. The data generating device 1 includes a processor 1A, a main memory 1B, and a nonvolatile storage unit 1C. The data generating device 1 is communicably connected to the computer 710 through a network NW. The processor 1A operates as a first acquisition unit 1F, a second acquisition unit 1G, and a generation unit 1H shown in Fig. 22 by executing a program stored in the storage unit 1C.

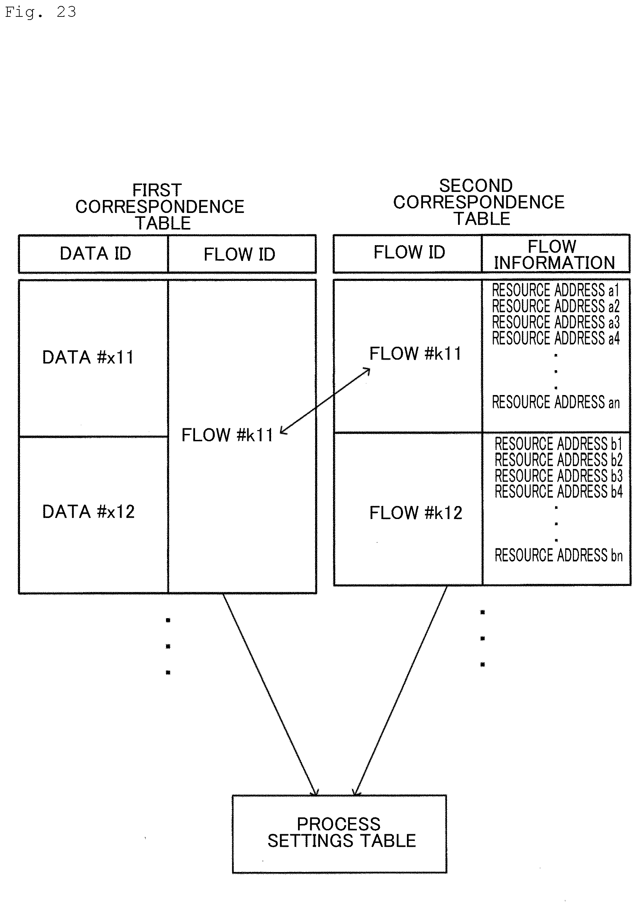

The first acquisition unit 1F acquires a first correspondence table (Fig. 23) which is data indicating the correspondence relation between data IDs and flow IDs. The second acquisition unit 1G acquires a second correspondence table which is data indicating the correspondence relation between flow IDs and flow information. The first correspondence table and the second correspondence table (Fig. 23) may be stored and acquired in the storage unit 1C, or may be acquired from outside the data generating device 1 (for example, an address management device that manages the two correspondence tables and the like using any method) through the network NW or the like. As shown in Fig. 23, the generation unit 1H associates the data ID of the acquired first correspondence table with the flow information of the acquired second correspondence table through the flow ID, and generates a process settings table (Fig. 19) in which the data ID and the flow information are associated with each other. The generation unit 1H supplies the generated process settings table to the computer 710 and stores it. The flow ID may be omitted in the process settings table. In this case, instead of steps S93 and S94 described above, the computation circuit 41 refers to the process settings table using the data ID included in the ID-tagged data as a key, and specifies the resource address corresponding to the sequence number included in the ID-tagged data among the resource addresses included in the flow information corresponding to the data ID.

As shown in Fig. 23, different data IDs may be associated with a common flow ID. More specifically, in a case where the data specified by the data ID is data such as image data that has the same processing desired to be executed but different content, the data ID may be different but the flow of processing may be the same. In the process settings table, the data ID and the flow information are associated with each other through the flow ID, and thus a different data ID can be associated with the same flow information, which leads to a reduction in the capacity of table data.

Meanwhile, in a case where the data ID of the ID-tagged data is not entered in the process settings table, the computation circuit 41 may query the data generating device 1 to acquire the flow ID or the like and have it entered in the process settings table. In a case where the data ID of the ID-tagged data is not entered in the process settings table, the computation circuit 41 may notify the control unit 20 to that effect, and the control unit 20 may make the above inquiry or the like.

In this embodiment, information on the location of each computation circuit can be clearly expressed by using the resource address, and thus it is possible to find the most optimal arrangement of the computation circuits during the execution continuous processing. In addition, by monitoring only the data address to be processed each processing portion, it is possible to trace the data processing order, processing process, and data flow (data traceability), which enables high security, easy troubleshooting, visualization, and the like. In addition, by using an address management mechanism equivalent to IPv6, it is possible to lighten the processing weight of a portion that performs processing of passing data flowing through a network, which makes it possible to process high-capacity data with low delay.

### [Modification example and the like]

A plurality of computation circuits that executes a plurality of processes on the processing data as described above may be integrated circuits such as FPGAs, may be some virtual circuits among them, or may be processors such as CPUs. The computation circuits may be connected to each other through a network other than a bus. The computation circuits may be connected to a router or the like. Meanwhile, the processing results of some computation circuits may be temporarily stored in the storage unit 30 instead of being directly input to other computation circuits.

### [configurations, modification examples, and the like using each of the above embodiments as an example]

(A) (1) A computer may include, for example, a plurality of computation circuits that sequentially execute a plurality of processes on processing data and a control unit that executes a program and causes the plurality of computation circuits to perform control for sequentially executing the plurality of processes. The plurality of processes include branch processing and parallel processing. The computation circuit includes processors such as a CPU and a GPU as well as the computation circuit 41 composed of an integrated circuit such as an FPGA as described above. The processor may be realized by executing a program to perform processing. The computation circuit may be realized by a virtual computation unit such as the process execution block 41C-1 which is a portion of the computation circuit 41.

For example, a computation circuit ID need only be imparted to each of the plurality of computation circuits. The computation circuit ID need only, for example, identify the computation circuit. The computation circuit ID may be realized by the above resource address.

For example, the plurality of computation circuits includes a first computation circuit that executes a first process among the plurality of processes and a second computation circuit that executes a second process of performing processing on a processing result of the first process among the plurality of processes, wherein the first computation circuit transmits the processing result of the first process with the computation circuit ID of the second computation circuit as a destination.

With the configuration as described above, for example, transfer by the control unit does not intervene during transmission of the processing result of the first process from the first computation circuit to the second computation circuit, and thus an improvement in throughput is expected.

The plurality of computation circuits may each be housed in separate housings, and the computer may be realized by a system composed of a plurality of housings.

(2) The computer may further include a main storage device of the control unit, and the processing result of the first process may be transmitted to the second computation circuit without going through the main storage device. This eliminates the need to transfer the processing result to the main storage device, which leads to a further improvement in throughput.

(3) For example, the computer may further include a plurality of first transmission circuits respectively connected to the plurality of computation circuits and a first communication line through which the plurality of first transmission circuits and the control unit are connected to each other. The plurality of first transmission circuits may include a 1-1st transmission circuit connected to the first computation circuit and a 1-2nd transmission circuit connected to the second computation circuit. The 1-1st transmission circuit may transmit the processing result of the first process together with the computation circuit ID of the second computation circuit to the first communication line, and the 1-2nd transmission circuit may receive the processing result of the first process transferred together with the computation circuit ID of the second computation device from the first communication line, and transfer the received processing result to the second computation circuit. In a case where the computation circuit is the process execution block or the like, the transmission circuit may be regarded as including the distribution block 41B-1, the end determination block 411-1, the transmission circuit 42-1, and the like shown in Fig. 6. With such a configuration, transfer of the processing result is easily realized.

(4) The plurality of computation circuits may include a third computation circuit that executes a third process of performing processing on the processing result of the second process among the plurality of processes. The plurality of first transmission circuits may include a 1-3rd transmission circuit connected to the third computation circuit. The 1-2nd transmission circuit may transmit the processing result of the second process together with the computation circuit ID of the third computation circuit to the first communication line. The 1-3rd transmission circuit may receive the processing result of the second process transferred together with the computation circuit ID of the third computation device from the first communication line, and transfer the received processing result to the third computation circuit. The processing result of the first process may be assigned the computation circuit ID of the second computation circuit and the computation circuit ID of the third computation circuit from the stage of transmission from the 1-1st transmission circuit to the first communication line. This makes it possible to sequentially transfer the processing results by deleting the computation circuit ID.

(5) The computer may further include a second transmission circuit connected to the second computation circuit and connected to a second communication line. The second computation circuit may be assigned a first circuit ID which is the computation circuit ID and a second circuit ID which is different from the first circuit ID. The second computation circuit may be configured such that data to be processed in the second process is input together with the first circuit ID from the first communication line through the 1-2nd transmission circuit, or is input together with the second circuit ID from the second communication line through the second transmission circuit. The second computation circuit may transmit data (processing result) obtained by executing the second process on the data to be processed to the first communication line through the 1-2nd transmission circuit when the first circuit ID is input, and transmit the data to the second communication line through the second transmission circuit when the second circuit ID is input. This makes it possible to correctly return the processing result to a transfer line from which the data to be processed is supplied.

(6) The second computation circuit may be able to execute a plurality of types of processes including the second process, the processing result may be assigned data capable of specifying processing to be executed by the second computation circuit, and the second computation circuit may execute processing specified on the basis of the data assigned to the processing result on the processing result. This makes it possible to improve throughput while causing the second computation circuit to execute a plurality of processes.

(7) The second computation circuit refers to a table on the basis of the data to specify processing to be executed. This makes it possible to reduce the amount of data transferred together with the processing result.

(8) The data may include data for designating branching of processing or parallel execution of a plurality of processes. This makes it possible to realize an improvement in throughput for various processes.

(9) The first computation circuit may preferentially execute one of the two first processes in accordance with a predetermined priority when there is a conflict between processing requests of the first process for first process target data and the first process for second process target data. This ensures that appropriate processing is performed for a plurality of processing requests.

(B)(1) A data generating device generates, for example, table data for determining destinations for processing data to be processed transferred between a plurality of computation circuits that sequentially execute a plurality of processes on the processing data. The data generating device includes a first acquisition unit that acquires a first correspondence table between a data ID for identifying the processing data and a flow ID for identifying a flow that specifies which computation circuit processes the processing data in what order, and a second acquisition unit that acquires a second correspondence table between the flow ID and flow information for specifying content of a flow identified by the flow ID according to the order of the destinations (more specifically, the destinations and the order thereof). Further, the data generating device associates the data ID of the acquired first correspondence table with the flow information of the acquired second correspondence table through the flow ID, and generates the table data in which the data ID and the flow information are associated with each other. With such a configuration, it is possible to suitably generate table data for determining destinations for data transferred between a plurality of computation circuits. In addition, a program causing a computer to operate as each of the units need only be stored in, for example, a non-volatile storage medium, more specifically, a computer-readable non-transitory storage medium.

(2) The generation unit may generate the table data in which the data ID, the flow ID, and the flow information are associated with each other. This makes it possible to specify a flow on the table data. The first correspondence table may include a different data ID associated with the same flow ID. This makes it possible to suppress an increase in the amount of table data due to the same flow information being associated with a different data ID.

(3) The destination may include affiliation information indicating an affiliation of a device provided with the computation circuit and device information indicating the device provided with the computation circuit. In a case where the computation circuit is a virtual computation unit, the device information may be information for specifying the computation circuit provided with the virtual computation unit. With such a configuration, the position of the computation circuit or the like can be specified by looking at the destination.

(4) The generation unit may transmit the generated table data to a computer including at least one of the plurality of computation circuits.

(C) A computer may include at least one of a plurality of computation circuits that sequentially execute a plurality of processes on processing data to be processed. At least one of the plurality of computation circuits may receive the processing data together with a data ID for identifying the processing data and a sequence number indicating the number of processes that have been executed among a plurality of processes. In addition, the one may increment the sequence number when the processing data is processed. In addition, the one may refer to the table data (see the above (B)) in which the data ID and the flow information are associated with each other, and acquire destinations corresponding to the incremented sequence number among destinations included in the flow information corresponding to the data ID. The one may transfer its own processing result to the acquired destination computation circuit. The next destination is suitably specified by the sequence number.

### [Scope of present invention]

The present invention is not limited to the above embodiments and modification examples. For example, the present invention includes various modifications for the above embodiments and modification examples that can be understood by those skilled in the art within the scope of the technical idea of the present invention. The configurations described in the above embodiments and modification examples can be appropriately combined within a consistent scope. In addition, it is also possible to delete any of the above configurations.

### [Reference Signs List]

- 1: Data generating device
- 10: Computer
- 20: Control unit
- 30: Storage unit
- 31: Main storage device
- 32: Auxiliary storage device
- 40: Computation unit
- 41: Computation circuit
- 42: Transmission circuit
- 43: Transmission circuit
- 50: Communication line
- 60: Communication line
- 110: Computer
- 210: Computer
- 410: Computer
- 510: Computer
- 610: Computer
- 710: Computer

## Claims

1. A data generating device configured to generate table data for determining destinations for data transferred between a plurality of computation circuits that sequentially execute a plurality of processes on processing data, the device comprising:
a first acquisition unit configured to acquire a first correspondence table between a data ID for identifying the processing data and a flow ID for identifying a flow that specifies which computation circuit processes the processing data in what order;
a second acquisition unit configured to acquire a second correspondence table between the flow ID and flow information for specifying content of a flow identified by the flow ID according to the order of the destinations; and
a generation unit configured to associate the data ID of the acquired first correspondence table with the flow information of the acquired second correspondence table through the flow ID, and generate the table data in which the data ID and the flow information are associated with each other.

2. The data generating device according to claim 1, wherein the generation unit generates the table data in which the data ID, the flow ID, and the flow information are associated with each other.

3. The data generating device according to claim 1 or 2, wherein, in the first correspondence table, different data IDs are associated with the same flow ID.

4. The data generating device according to any one of claims 1 to 3, wherein the destination includes affiliation information indicating an affiliation of a device provided with the computation circuit and device information indicating the device provided with the computation circuit.

5. A program causing a computer, configured to generate table data for determining destinations for data transferred between a plurality of computation circuits that sequentially execute a plurality of processes on processing data, to execute:
a first acquisition step of acquiring a first correspondence table between a data ID for identifying the processing data and a flow ID for identifying a flow that specifies which computation circuit processes the processing data in what order;
a second acquisition step of acquiring a second correspondence table between the flow ID and flow information for specifying content of a flow identified by the flow ID according to the order of the destinations; and
a generation step of associating the data ID of the acquired first correspondence table with the flow information of the acquired second correspondence table through the flow ID, and generating the table data in which the data ID and the flow information are associated with each other.
